# EUROPEAN PATENT APPLICATION

(11) **EP 2 799 494 A1**
(43) Date of publication of application: **05.11.2014**
(21) Application number: 12862118.2
(22) Date of filing: 26.12.2012
(51) Int. Cl.: C08L 79/08, C08G 73/10, C09D 179/08, G02F 1/1335

(54) **POLYAMIC ACID SOLUTION**

(30) Priority: 27.12.2011 KR 20110143786
(71) Applicant: Kolon Industries, Inc., Gwacheon-si, Gyeonggi-do 427-800 (KR)
(72) Inventor: HONG, Ki Il, Gyeonggi-do 448-170 (KR); MIN, Woong Ki, Gyeonggi-do 446-734 (KR)
(74) Representative: Ter Meer Steinmeister & Partner
(86) International application number: PCT/KR2012/011460
(87) International publication number: WO 2013/100558

(57) **Abstract**

The present invention relates to a polyamic acid solution and a display device, and more specifically, to a polyamic acid solution which can be used for a base layer or a protective layer of a display device, and a display device including a film formed by the imidization of the polyamic acid solution. The polyamic acid solution has excellent thermal characteristics such as a low coefficient of thermal expansion and a high thermal decomposition temperature, and can thus be applied to a base layer or a protective layer of a display device.

## Description

### [Technical Field]

The present invention relates to a polyamic acid solution and a method of preparing the same, and, more particularly, to a polyamic acid solution which can be used for a base layer or protective layer for various display elements.

### [Background Art]

Nowadays, ubiquitous age, in which users can meet information everywhen and everywhere, is approaching, and digital convergence, in which computers, communications, information, household electric appliances and the like are united or combined, is rapidly advancing. Therefore, displays, serving as interfaces between users and electronic information appliances, become ever more important. Besides, as requirements for image information having high resolution, high brightness and high clearness become more intense, large-screen liquid crystal displays (LCDs), plasma displays (PDs), organic light-emitting diodes (OLEDs) and the like are competing with each other.

Recently, a flexible display, which is a portable next-generation display that can be warped or bent, has attracted considerable attention. In order to make such a flexible display, a novel flexible substrate is required to replace a rigid glass substrate.

Currently-developed flexible displays are advancing in the form of LCD, OLED or EPD, based on passive or active drive elements. Such flexible displays are driven by placing passive or active drive elements on a flexible polymer substrate. Such flexible displays are classified into active flexible displays and passive flexible displays, and, currently, active flexible displays capable of realizing high pixel precision are receiving more considerable attention than passive flexible displays. Particularly, an active flexible display is configured such that a gate electrode, an insulation film, a source electrode and a drain electrode are structured on a polymer substrate, and display elements are mounted thereon, thus constituting a unit display device. However, since a process of manufacturing an active flexible display is generally performed at high temperatures, when a polymer substrate having no heat resistance is used, the polymer substrate is easily changed in dimension, and is thermally deformed during the process, and thus the alignment of circuit patterns is insufficient or the surface characteristics of the polymer substrate are changed. Thus, this polymer substrate is problematic in that it is not suitable as a substrate for displays.

Therefore, attempts to develop various heat-resistant plastic materials for flexible displays have been made. Typical examples of heat-resistant plastic materials may include polyethylene naphthalate (PEN), polyether sulfone (PES), and the like. However, these plastic materials are also problematic in that they have poor dimensional stability at a high temperature of 300°C or higher because they have a glass transition temperature (Tg) of lower than 300°C and a thermal expansion coefficient of 20 ~ 60 ppm/°C at Tg, and in that, when display devices are made based on these plastic materials, the quality thereof may be negatively influenced (John Scheirs and Timothy E. Long, Modern Polyesters: Chemistry and Technology of Polyesters and Copolyesters, 2004); and Sumilite FS-1300, Sumitomo Bakelite Catalogue).

Further, when a plastic film made of such a plastic material is used, a display device must be fabricated by attaching the plastic film onto a metal foil or glass plate because this plastic film does not have self bearing power. In this case, there are problems in that a process of attaching the plastic film to the metal foil or glass plate using an adhesive and a process of separating the plastic film therefrom must be additionally performed, and in that the flatness of the display device deteriorates when the attaching of the plastic film to the metal foil or glass plate is not properly conducted.

Considering the above problems, Korean Patent Application Publication No. 10-2010-0080301, filed by the present applicant, discloses a polyamic acid solution which can be applied to a base layer or a protective layer because it has a low thermal expansion coefficient, high strength and high elasticity. However, this polyamic acid solution is also problematic in that it cannot satisfy a sufficiently low thermal expansion coefficient and dimensional stability at high temperature.

### [Disclosure]

### [Technical Problem]

The present invention intends to provide a polymer material for flexible displays, which has excellent dimensional stability even at a high temperature of 500°C or more, and intends to provide a polymer material, which can be used in a base layer or protective layer of a display device having excellent heat resistance and a low thermal expansion coefficient.

Meanwhile, the present intends to provide polyamic acid in the form of a liquid. The reason for this is that, when polyamic acid is provided in the form of a film, since this film does not have self bearing power for maintaining its form, a display device must be fabricated by attaching this film onto a metal foil or glass plate, and, in this case, there may occur problems in that a process of attaching the film to the metal foil or glass plate using an adhesive and a process of separating the film therefrom must be additionally performed, and in that the flatness of the display device becomes poor when the attaching of the film to the metal foil or glass plate is not properly conducted. Currently, a process of fabricating a display device is performed at a high temperature of about 450°C. When the process of attaching the film to the metal foil or glass plate using an adhesive is conducted under such a circumstance, the adhesive may not be suitable for high temperature, and thus it is not suitable to put this process to practical use.

Therefore, in the present invention, polyamic acid is provided in the form of a liquid, not in the form of a film. This liquid polymaic acid is applied on a pretreated ceramic support or glass plate (other different supports may also be used), and then dried to form an imidized film. This process is conducted in order to maintain its form on the pretreated ceramic support or glass plate (other different supports may also be used) and to easily fabricate a display device.

Further, the present invention intends to provide a method of preparing a plastic material having a high decomposition temperature and low thermal expansion coefficient on a commercial scale.

Here, the method of preparing a plastic material on a commercial scale is referred to as a method of preparing a plastic material on a scale applicable for a real display device manufacturing process, not on a laboratory scale. In the present invention, the method is performed on a scale of 50 L (based on a solution), but the scale is not particularly limited as long as it is 5 L or more (based on a solution).

In order for the commercialization of polyamic acid, foreign matter, which can be produced from the process of preparing polymaic acid, must be specified. The reason for this is that the presence of foreign matter in the process of fabricating a display device acts as a cause of fabrication failure or defect generation, thus exerting a great influence on the production yield thereof.

### [Technical Solution]

An aspect of the present invention provides a polyamic acid solution for forming a base layer or protective layer of a display device, wherein the polyamic acid solution is a reaction product of an aromatic dianhydride and an aromatic diamine, and wherein, at the time of forming the solution into an imidized film, the imidized film has a thermal expansion coefficient of 5 ppm/°C or less at a temperature range of 50 ~ 450°C and a thermal decomposition temperature of 500°C or more, the thermal decomposition temperature being defined as a temperature at which a weight reduction rate measured by a thermogravimetric analyzer reaches 1%.

Here, the polyamic acid solution may have a viscosity of 50 ~ 5000 poise.

Further, the reaction product may be a reaction product of a rigid aromatic dianhydride and a rigid aromatic diamine, each of which does not include a -O-, -CO-, -NHCO-, -S-, -SO₂-, -CO-O-, -CH₂- or -C(CH₃)₂- chain between aromatic rings.

Further, the reaction product may be a reaction product of para-phenylenediamine as an aromatic diamine, pyromellitic dianhydride as an aromatic dianhydride and biphenyltetracarboxylic dianhydride as an aromatic dianhydride. Further, the reaction product may include biphenyltetracarboxylic dianhydride, as an aromatic dianhyride, in an amount of 40 mol% or less.

Further, the reaction product may be prepared on a scale of 5 L or more with respect to each polymerization, accompanying commercial consideration.

Considering the preparation method of the polyamic acid solution, the reaction product may be obtained by a showering process of introducing a predetermined amount of a reaction solvent into a reactor, adding powdered aromatic dianhydride or aromatic diamine thereto as a raw material and then washing the non-dissolved powdered raw material remaining on the wall of the reactor and stirrer and simultaneously dissolving the washed raw material in the solution.

Additionally, after the showering process, a reactor may be heated to 40 ~ 80°C and then the reaction product may be stirred.

Separately or additionally, the reaction product may be obtained by a bubbling process of bubbling the raw material by blowing inert gas into the lowermost stage of a reactor during a dissolving process after the introduction of the raw material.

Another aspect of the present invention provides a polyimide coating layer formed of the polyamic acid solution.

Still another aspect of the present invention provides a display device, including the polyimide coating layer as a protective layer. Still another aspect of the present invention provides a display device, including the polyimide coating layer as a base layer.

### [Best Mode]

Hereinafter, the present invention will be described in detail.

A preferred embodiment of the present invention provides a polyamic acid solution, wherein the polyamic acid solution is a reaction product of an aromatic dianhydride and an aromatic diamine, and wherein, at the time of forming the solution into an imidized film, the imidized film has a thermal expansion coefficient of 5 ppm/°C or less at a temperature range of 50 ~ 450°C and a thermal decomposition temperature of 500°C or more. Here, the thermal decomposition temperature is defined as a temperature (Td 1%) at which a weight reduction rate measured by a thermogravimetric analyzer reaches 1%.

The thermal expansion coefficient and thermal decomposition temperature within the temperature range express the thermal environmental changes occurring during a process of manufacturing a display device when the film formed by applying the polyamic acid solution and then imidizing this solution is used as a base layer or protective layer of the display device, and consider the dimensional stability and thermal decomposition stability at high temperature.

In the display device, a base layer is repeatedly exposed to high-temperature environment during a process of manufacturing a display device. In this case, the increase in the thermal expansion coefficient of the base layer is advantageous in the manufacture of the display device, and volatile materials must not be generated within a process temperature in order to easily design the process of manufacturing a display device.

That is, in the process of manufacturing an electrode and a drive element, considering the points that, when the thermal expansion coefficient of a polymer material is larger than that of a ceramic support or a drive element, a circuit work becomes impossible, a display device is warped and the misalignment between the electrode and the drive element occurs, it is preferred that the thermal expansion coefficient of the imidized film formed from the polyamic acid solution, measured at 50 ~ 450°C, be 5 ppm/°C or less. Further, when volatile organic compounds are produced by the thermal decomposition of a polymer material through a high-temperature process, a manufacturing facility or the like is polluted, and thus the process itself cannot be carried out. Therefore, elements can be manufactured at high temperature only when a polymer material having a high thermal composition temperature, particularly, a high thermal composition temperature setting forth a small weight reduction as a premise is used.

Further, if the polymer material itself includes a large amount of foreign matter, a circuit work cannot be carried out during a process of manufacturing a display device, and, even though the circuit work is possible, the foreign matter acts as a harmful material, thus finally making the quality of the display device poor.

Therefore, special composition, conditions and processes for removing foreign matter from the polymer material or reducing the content of foreign matter in the polymer material must be carried out.

Such a polyamic acid solution may be obtained by the polymerization of dianhydride monomers and diamine monomers (Hereinafter, referred to as rigid monomers) each having no flexible chain between aromatic rings. Here, specifically, the rigid monomer may be defined as a monomer having no -O-, - CO-, -NHCO-, -S-, -SO2-, -CO-O-, -CH2- or -C(CH3)2- chain, that is, a flexible chain, between aromatic rings.

Examples of dianhydrides may include biphenyltetracarboxylic dianhydride (3,3',4,4'-biphenyltetracarboxylic dianhydride (BPDA)), pyromellitic dianhydride (1,2,4,5-benzenetetracarboxylic dianhydride (PMDA)), and the like. Examples of diamines may include para-phenylene diamine (p-PDA), aminophenyl aminobenzoxazole (2-(4-aminophenyl)-5-aminobenzoxazole (APAB)), and the like. Preferably, p-phenylenediamine may be used.

Generally, diamine and dianhydride may be used at a molar ratio of 1:0.9 to 0.9:1. Within the molar ratio range, one kind of dianhydride and one kind of diamine may be used, two kinds of dianhydride and one kind of diamine may be used, or one kind of dianhydride and two kinds of diamine may be used. Particularly, in terms of decreasing a thermal expansion coefficient and increasing a thermal decomposition temperature, it is preferred that biphenyltetracarboxylic dianhydride, as an aromatic anhydride, be included in an amount of 40 mol% or less.

In the polymerization of a polyamic acid solution as a polyimide precursor, a dianhydride component and a diamine component are dissolved in an organic solvent at an equimolar ratio and then reacted with each other, thus preparing the polyamic acid solution.

The reaction conditions thereof are not particularly limited. Preferably, reaction temperature may be -20 ~ 80°C, and reaction time may be 2 ~ 48 hours. Further, it is preferred that the reaction be performed under an inert atmosphere such as an argon atmosphere or a nitrogen atmosphere.

The organic solvent for the polymerization reaction of the polyamic acid solution is not particularly limited as long as it can dissolve polyamic acid. As the organic solvent, at least one commonly-known polar solvent selected from among m-cresol, N-methyl-2-pyrrolidone (NMP), dimethylformamide (DMF), dimethylacetamide (DMAc), dimethylsulfoxide (DMSO), acetone, and diethyl acetate. Besides, a low-melting point solvent, such as tetrahydrofuran (THF) or chloroform, or a low-absorptivity solvent, such as gamma-butyrolactone, may be used as the organic solvent.

The content of the organic solvent is not particularly limited. However, in order to obtain a polyamic acid solution having suitable molecular weight and viscosity, the content of the organic solvent in the polyamic acid solution may be 50 ~ 95 wt%, and preferably 70 ~ 90 wt%.

Preferably, a polyimide resin prepared by the imidization of this polyamic acid solution may have a glass transition temperature (Tg) of 300°C or more in consideration of thermal stability.

That is, since the polyimide resin, which is a well-known heat-resistant material, has a high glass transition temperature (Tg) and a low thermal expansion coefficient, it can be used in manufacturing TFT or the like at a temperature of 400°C or more. Therefore, when the polyamic acid solution is applied and cured, it is advantageous in the formation of a pattern, and it is fixedly attached onto a support without using an adhesive, and thus smoothness can be easily maintained, thereby realizing a flexible display.

Meanwhile, when a polyimide coating layer is formed using a polyamic acid solution, conventionally, a filler is added to the polyamic acid solution for the purpose of improving various characteristics of the polyimide coating layer, such as surface characteristics and thermal conductivity. However, such a filler can exert a negative influence on a process of manufacturing a display device, thus finally deteriorating the quality of a display device or reducing the yield thereof. Therefore, in the present invention, a filler is not added.

Further, even though such a filler is not added, foreign matter can still be generated or introduced during a process of preparing polyamic acid. Therefore, in order to solve this problem, a filtering process may be conducted.

The filtering process is a general filtering process, and is not particularly limited. However, in this case, a filter having a pore size of 10 µm or less, preferably, 1 µm or less must be used.

As a method of forming an imidized film from a polyamic acid solution, a method copying a process of manufacturing a flexible display device may be used. That is, a method of uniformly applying a polyamic acid solution onto a support and then imidizing the polyamic acid solution may be used. In the process of manufacturing a display device, generally, electrodes, display elements and the like are sequentially laminated onto a base layer. Therefore, in order to apply a polyamic acid solution to a base layer, a polyamic acid solution is applied onto a support and imidized to form an imidized film, and then display elements are laminated on the imidized film by a general method, and, finally, the support is separated therefrom. In this case, the flatness of the base layer can be improved compared to when a film-shaped plastic material is applied to a substrate.

Here, in the case of a film-shaped plastic material, an adhesion layer is needed in addition to a support. However, currently, in the process of manufacturing a display device, an adhesion layer that can be used at high temperature does not exist. Therefore, in the present invention, only a method of applying a polyamic acid solution to a support is used.

Further, the polyamic acid solution is applied onto a part laminated on a display element to form a polyimide coating layer, and this polyimide coating layer may be used as a protective layer.

In this case, considering coating workability and coating uniformity, it is preferred that the viscosity of the polyamic acid solution be 50 ~ 5,000 poise.

In this case, the viscosity of the polyamic acid solution may be determined by a coating method or the required thickness of an imidized film.

Further, the present invention proposes a method of preparing a polyamic acid solution, wherein the polyamic acid solution can be polymerized on a commercially-available scale of 5L (based on solution) once by a batch method.

In the case of such a large scale (5L), unlike a laboratory scale, a special reactor and a special reaction are required. The largest difference between the large scale and the laboratory scale is the dissolution of a powdered raw material. In a large-scale reactor, generally, a raw material is not easily dissolved in a solvent due to the limitation of stirring ability. Therefore, in the present invention, a solution for this is also proposed.

In the present invention, only a predetermined amount of a solvent, not just any amount thereof, is introduced into a reactor in the early stage. Subsequently, a powdered raw material is added and dissolved in the solvent. Then the non-dissolved powdered raw material remaining on the wall of the reactor and stirrer is washed off and is simultaneously further dissolved in the solution. This process is referred to as a showering process. After the showering process, the reactor is heated to 40 ~ 80°C, and the solution is stirred. Further, in the case of the large-scale reactor for commercial production of the present invention, since non-dissolved matter can exist in the lowermost portion of the reactor due to the limitation of stirring performance, inert gas, such as argon or nitrogen, is blown into the lowermost end of the reactor by an additional method to allow the non-dissolved matter to be introduced into the solution in the reactor together with bubbles, thereby adding the stirring performance of the solution in the lowermost end of the reactor, the lowermost end thereof being a dead zone of the stirring performance. This process is referred to as a bubbling process.

In this case, the amount of the introduced inert gas may be changed depending on the form of a valve and the viscosity of the solution.

The above-mentioned reactor heating process, showering process and bubbling process may be selectively used depending on the state of the solution. That is, only one of these processes may be used, two or more of them may be used, or all of them may be used.

Preferably, all of the reactor heating process, showering process and bubbling process may be used.

The number of foreign matter particles of 0.5 µm or more in 40g of the polyamic acid solution is 30 or less. That is, the polyamic acid solution scarcely includes foreign matter. Here, the foreign matter is matter measured by the naked eye through an optical microscope (magnification: 50 ~ 500).

Such a polyamic acid solution is applied and imidized to form a polyimide coating layer. In this case, the imidizatin of the polyamic acid solution may be conducted by thermal imidization, chemical imidization or a combination thereof. In the case of chemical imidization, the imidization of the polyamic acid solution is performed by adding a dehydrator represented as an acid anhydride such as acetic anhydride and an imidization catalyst represented as a tertiary amine such as isoquinoline, beta-picoline or pyridine to the polyamic acid solution. In the case of thermal imidization or a combination of thermal imidization and chemical imidization, the heating conditions of the polyamic acid solution may be changed depending on the kind of a polyamic acid solution and the required thickness of an imidized film.

In the case where thermal imidization is used in combination with chemical imidization, a method of forming an imidized film is described in detail. In the method, a dehydrator and an imidization catalyst are added to a polyamic acid solution, and then this polyamic acid solution is cast on a support and then heated to 80 ~ 200°C, preferably, 100 ~ 180°C to activate the dehydrator and the imidization catalyst to partially cure and dry this solution, and then this cured and dried solution is further heated to 200 ~ 400°C for 1 ~ 120 minutes, thereby obtaining an imidized film.

Thereafter, display element parts may be sequentially laminated on this imidized film. Further, the polyamic acid solution including the dehydrateor and the imidization catalyst are applied onto display element parts to form an imidization film, and this imidization film may be used as a protective layer.

As described above, a display element having excellent thermal stability and suitable flexibility and mechanical strength may be provided by applying a polyamic acid solution to a display element.

Hereinafter, the present invention will be described in more detail with reference to the following Examples. However, the scope of the present invention is not limited thereto.

### <Example 1>

A 50 L reactor provided with a stirrer, a nitrogen injector, a fine powder injector, a temperature controller, a cooler and a filtering system was filled with 39,000 g of N,N-dimethylacetamide (DMAc) while supplying nitrogen, and then the temperature of the reactor was adjusted to 25°C, and then 2,013.55 g (18.62 mol) of para phenylene diamine (p-PDA) was added thereto using the fine powder injector to prepare a solution, and then this solution was stirred to maintain the temperature of the solution at 25°C. Further, non-dissolved p-PDA remaining on the wall of the reactor and the stirrer was washed with 1000 g of N,N-dimethylacetamide (DMAc), and dissolved in the solution. In this case, in order to easily dissolve the raw materials in the solution, the reactor was heated to 40 ~ 80°C, and then the solution was stirred. Further, in the case of the large-scale reactor for commercial production of the present invention, since non-dissolved matter could exist in the lowermost portion of the reactor due to the limitation of stirring performance, inert gas, such as argon or nitrogen, was blown into the lowermost end of the reactor by an additional method to allow the non-dissolved matter to be introduced into the solution in the reactor together with bubbles, thereby adding the stirring performance of the solution in the lowermost end of the reactor, the lowermost end thereof being a dead zone of the stirring performance.

After the p-PDA was completely dissolved, the temperature of the reactor was adjusted to 25°C again, and 1,627.06 g (5.53 mol) of BPDA [3,3',4,4'-biphenyltetracarboxylic dianhydride] was introduced into the reactor using the fine powder injector. Thereafter, this solution was stirred, and was maintained at 25°C. Further, non-dissolved BPDA remaining on the wall of the reactor and the stirrer was washed with 2000 g of N,N-dimethylacetamide (DMAc), and dissolved in the solution. Then, the reactor was heated to 40 ~ 80°C, and then the solution was stirred. Further, inert gas, such as argon or nitrogen, was blown into the lowermost end of the reactor to allow the non-dissolved matter to be introduced into the solution in the reactor together with bubbles.

After the BPDA was completely dissolved, the temperature of the reactor was adjusted to 25°C again, and 2,814.52 g (12.90 mol) of PMDA [pyromellitic dianhydride] was introduced into the reactor using the fine powder injector. In this case, PMDA may be entirely introduced at once, and may also be separately introduced 2 ~ 5 times at regular time intervals (10 min to 3 hr).

Preferably, it is advantageous that about 99 wt% of PMDA, based on the total amount thereof, is first introduced, and then the reaction degree or polymerization degree of the resultant solution is indirectly tested through the viscosity thereof after a reaction for 30 min to 1 hr, and then the remaining PMDA is stepwisely introduced at intervals of 0.5 wt%.

Stepwisely, non-dissolved PMDA remaining on the wall of the reactor and the stirrer was washed with N,N-dimethylacetamide (DMAc), and dissolved in the solution. In this showering process, since the step of washing PMDA was second step to fifth step, the total amount of N,N-dimethylacetamide (DMAc) consuming during the showering process was set to 1,500 g.

Subsequently, the reactor was heated to 40 ~ 80°C, and then the solution was stirred. Further, inert gas, such as argon or nitrogen, was blown into the lowermost end of the reactor to allow the non-dissolved matter to be introduced into the solution in the reactor together with bubbles.

Then, the resultant solution was filtered using a filter having a pore size of 1 µm to remove foreign matter. In the filtering process, the type, raw material and form of the filter are not particularly limited.

Thereafter, the filtered solution was stirred for 24 hours to obtain a polyamic acid solution (Mw = 110,000) having a viscosity of 100 poise. In this case, the viscosity of the polyamic acid solution was measured using a Brookfield viscometer.

In order to simulate and evaluate the usage of the obtained polyamic acid solution as a base layer or protective layer for flexible display, this polyamic acid solution was defoamed in vacuum, cooled to room temperature, cast on a stainless plate to a thickness of 60 ~ 100 µm, dried at 150°C for 10 minutes by hot air, heated to 450°C for 30 minutes, and then slowly cooled to be separated from a support, thereby obtaining a polyimide film having a thickness of 10 ~ 15 µm.

### <Example 2>

Example 2 was carried out in the same manner as in Example 1, except that 3,288.28 g (15.07 mol) of PMDA [pyromellitic dianhydride] and 1,108.88 g (3.77 mol) of BPDA [3,3',4,4' -biphenyltetracarboxylic dianhydride] were used.

### <Example 3>

Example 3 was carried out in the same manner as in Example 1, except that 3,783.63 g (17.35 mol) of PMDA [pyromellitic dianhydride] and 567.08 g (1.93 mol) of BPDA [3,3',4,4' -Biphenyltetracarboxylic Dianhydride] were used.

### <Example 4>

Example 4 was carried out in the same manner as in Example 1, except that filtering was performed two times using the same filter.

### <Example 5>

Example 5 was carried out in the same manner as in Example 1, except that filtering was performed using a filter having a pore size of 0.5 µm.

### <Example 6>

Example 6 was carried out in the same manner as in Example 1, except that 2,360.98 g (10.82 mol) of PMDA [pyromellitic dianhydride] and 2,123.14 g (7.22 mol) of BPDA [3,3',4,4' -Biphenyltetracarboxylic Dianhydride] were used.

### <Reference Example 1>

A 50 L reactor provided with a stirrer, a nitrogen injector, a fine powder injector, a temperature controller, a cooler and a filtering system was filled with 39,000 g of N,N-dimethylacetamide (DMAc) while supplying nitrogen, and then the temperature of the reactor was adjusted to 25°C, and then 2,013.55 g (18.62 mol) of parat-pheylene diamine (p-PDA) was added thereto using the fine powder injector to prepare a solution, and then this solution was stirred to maintain the temperature of the solution at 25°C. Further, non-dissolved p-PDA remaining on the wall of the reactor and the stirrer was washed with 1000 g of N,N-dimethylacetamide (DMAc), and dissolved in the solution. In this case, in order to easily dissolve the raw materials in the solution, the reactor was heated to 40 ~ 80°C, and then the solution was stirred. Further, in the case of the large-scale reactor for commercial production of the present invention, since non-dissolved matter could exist in the lowermost portion of the reactor due to the limitation of stirring performance, inert gas, such as argon or nitrogen, was blown into the lowermost end of the reactor by an additional method to allow the non-dissolved matter to be introduced into the solution in the reactor together with bubbles, thereby adding the stirring performance of the solution in the lowermost end of the reactor, the lowermost end thereof being a dead zone of the stirring performance.

After the p-PDA was completely dissolved, the temperature of the reactor was adjusted to 25°C again, and 2,598.48 g (8.83 mol) of BPDA [3,3',4,4'-biphenyltetracarboxylic dianhydride] was introduced into the reactor using the fine powder injector. Thereafter, this solution was stirred, and was maintained at 25°C. Further, non-dissolved BPDA remaining on the wall of the reactor and the stirrer was washed with 2000 g of N,N-dimethylacetamide (DMAc), and dissolved in the solution. Then, the reactor was heated to 40 ~ 80°C, and then the solution was stirred. Further, inert gas, such as argon or nitrogen, was blown into the lowermost end of the reactor to allow the non-dissolved matter to be introduced into the solution in the reactor together with bubbles.

After the BPDA was completely dissolved, the temperature of the reactor was adjusted to 25°C again, and 1,926.38 g (8.83 mol) of PMDA [pyromellitic dianhydride] was introduced into the reactor using the fine powder injector. In this case, PMDA may be entirely introduced at once, and may also be separately introduced 2 ~ 5 times at regular time intervals (10 min to 3 hr).

Preferably, it is advantageous that about 99 wt% of PMDA, based on the total amount thereof, is first introduced, and then the reaction degree or polymerization degree of the resultant solution is indirectly tested through the viscosity thereof after a reaction for 30 min to 1 hr, and then the remaining PMDA is stepwisely introduced at intervals of 0.5 wt%.

Stepwisely, non-dissolved PMDA remaining on the wall of the reactor and the stirrer was washed with N,N-dimethylacetamide (DMAc), and dissolved in the solution. In this showering process, since the step of washing PMDA was second step to fifth step, the total amount of N,N-dimethylacetamide (DMAc) consuming during the showering process was set to 1,500 g.

Subsequently, the reactor was heated to 40 ~ 80°C, and then the solution was stirred. Further, inert gas, such as argon or nitrogen, was blown into the lowermost end of the reactor to allow the non-dissolved matter to be introduced into the solution in the reactor together with bubbles.

Then, the resultant solution was filtered using a filter having a pore size of 1 µm to remove foreign matter.

In the filtering process, the type, raw material and form of the filter are not particularly limited.

Thereafter, the filtered solution was stirred for 24 hours to obtain a polyamic acid solution (Mw = 110,000) having a viscosity of 100 poise. In this case, the viscosity of the polyamic acid solution was measured using a Brookfield viscometer.

In order to simulate and evaluate the usage of the obtained polyamic acid solution as a base layer or protective layer for flexible display, this polyamic acid solution was defoamed in vacuum, cooled to room temperature, cast on a stainless plate to a thickness of 60 ~ 100 µm, dried at 150°C for 10 minutes by hot air, heated to 450°C for 30 minutes, and then slowly cooled to be separated from a support, thereby obtaining a polyimide film having a thickness of 10 ~ 15 µm.

### <Reference Example 2>

Reference Example 2 was carried out in the same manner as in Reference Example 1, except that 1,509.57 g (6.92 mol) of PMDA [pyromellitic dianhydride] and 3,054.38 g (10.38 mol) of BPDA [3,3',4,4' -biphenyltetracarboxylic dianhydride] were used.

### <Reference Example 3>

Reference Example 3 was carried out in the same manner as in Reference Example 1, except that 1,109.48 g (5.09 mol) of PMDA [pyromellitic dianhydride] and 3,491.99 g (11.87 mol) of BPDA [3,3',4,4' -biphenyltetracarboxylic dianhydride] were used.

### <Reference Example 4>

Reference Example 4 was carried out in the same manner as in Reference Example 1, except that 725.11 g (3.32 mol) of PMDA [pyromellitic dianhydride] and 3,912.39 g (13.30 mol) of BPDA [3,3',4,4' -biphenyltetracarboxylic dianhydride] were used.

### <Reference Example 5>

Reference Example 5 was carried out in the same manner as in Reference Example 1, except that 355.57 g (1.63 mol) of PMDA [pyromellitic dianhydride] and 4,316.59 g (14.67 mol) of BPDA [3,3',4,4' -biphenyltetracarboxylic dianhydride] were used.

### <Reference Example 6>

Reference Example 6 was carried out in the same manner as in Example 1, except that filtering was not performed.

### <Reference Example 7>

Reference Example 7 was carried out in the same manner as in Example 1, except that filtering was performed using a filter having a pore size of 3 µm.

### <Reference Example 8>

Reference Example 8 was carried out in the same manner as in Example 1, except that APAB [2-(4-aminophenyl)-5-aminobenzoxazole] was used in an amount of 4,194.12 g (18.62 mol) instead of p-PDA [para-phenylene diamine].

### <Reference Example 9>

Reference Example 9 was carried out in the same manner as in Example 1, except that ODA [3,3-Oxydianiline] was used in an amount of 2,013.55 g (18.62 mol) instead of p-PDA [para-phenylene diamine].

### <Reference Example 10>

Reference Example 10 was carried out in the same manner as in Example 1, except that the showering process was not performed after the introduction of a raw material.

### <Reference Example 11>

Reference Example 11 was carried out in the same manner as in Example 1, except that the inert gas bubbling process was not performed during the process of dissolving a raw material.

### (1) Thermal expansion coefficient

The corresponding sample was annealed at 450°C for 10 minutes before the measurement of the thermal expansion coefficient thereof. The measurement of the thermal expansion coefficient of the annealed sample (polyimide coating layer) was carried out by cutting a part of the sample to a width of 4 mm and a length of 24 mm and then measuring the thermal expansion coefficient value thereof using a thermo-mechanical analyzer (TMA, manufactured by TA Corporation). That is, the thermal expansion coefficient of the sample was measured by hanging the sample on a support, applying a force of 50 mN to the sample and then heating the sample from 50°C to 450°C at a heating rate of 5°C/min under a nitrogen atmosphere. The thermal expansion coefficient was calculated to the first decimal place, and the unit thereof is expressed by [ppm/°C].

### (2) Thermal decomposition temperature

The measurement of thermal decomposition temperature was carried out using a thermo-gravimetric analyzer (TGA, manufactured by Perkin-Elmer Corporation). A polyimide film was cut to a size of 3mm x 3 mm, placed on a pretreated and weighed fan, adiabatically treated at 110°C for 30 minutes, cooled to room temperature, and then heated to 600°C at a heating rate of 5°C/min to measure the weight reduction of the polyimide film. The thermal decomposition temperature of the polyimide film was determined when the weight reduction rate of the polyimide film to the initially-loaded weight thereof was 1%.

### (3) Foreign matter

In the analysis of foreign matter, 40 g of sample (amount used in manufacturing a display having a size of 370 mm x 470 mm) was diluted with 360 g of NMP [N-methyl-2-pyrrolidone] (sample 40 g + solvent 360 g = total 400 g).

400g of the diluted solution was filtered in vacuum using a filter having a pore size of 0.5 µm. The filter was dried in an oven at about 80°C. In this case, the filter was hermetically sealed such that water is not additionally introduced. The number of foreign matter particles remaining on the dried filter was counted using an optical microscope.

**[Table 1]**

| Class. | Composition (mol%) | | | | | Filtering | Thermal expansion coefficient [ppm/°C] | Theremal decomposition temperature [°C] | Thickness (µm) | Foreign matter [ea] |
|---|---|---|---|---|---|---|---|---|---|---|
| | Dianhydri de | | Diamine | | | | | | | |
| | PMD A | BPD A | p-PDA | APAB | ODA | | | | | |
| Ex. 1 | 70 | 30 | 100 | 0 | 0 | 1, one time | 0.98 | 525 | 12 | 21 |
| Ex. 2 | 80 | 20 | 100 | 0 | 0 | 1, one time | 1.58 | 533 | 12 | 24 |
| Ex. 3 | 90 | 10 | 100 | 0 | 0 | 1, one time | -2.50 | 535 | 10 | 17 |
| Ex. 4 | 70 | 30 | 100 | 0 | 0 | 1, two times | 0.98 | 525 | 11 | 9 |
| Ex. 5 | 70 | 30 | 100 | 0 | 0 | 0.5, one time | 0.98 | 525 | 12 | 5 |
| Ex. 6 | 60 | 40 | 100 | 0 | 0 | 1, one time | 2.54 | 522 | 11 | 20 |
| Ref. Ex. 1 | 50 | 50 | 100 | 0 | 0 | 1, one time | 6.35 | 520 | 11 | 18 |
| Ref. Ex. 2 | 40 | 60 | 100 | 0 | 0 | 1, one time | 13.6 | 515 | 10 | 21 |
| Ref. Ex. 3 | 30 | 70 | 100 | 0 | 0 | 1, one time | 16.69 | 513 | 11 | 10 |
| Ref. Ex. 4 | 20 | 80 | 100 | 0 | 0 | 1, one time | 17.68 | 505 | 11 | 27 |
| Ref. Ex. 5 | 10 | 90 | 100 | 0 | 0 | 1, one time | 17.73 | 495 | 11 | 13 |
| Ref. Ex. 6 | 70 | 30 | 100 | 0 | 0 | X | 0.98 | 525 | 12 | 50 or more |
| Ref. Ex. 7 | 70 | 30 | 100 | 0 | 0 | 3, one time | 0.98 | 525 | 12 | 50 or more |
| Ref. Ex. 8 | 70 | 30 | 0 | 100 | 0 | 1, one time | 9.88 | 540 | 11 | 25 |
| Ref. Ex. 9 | 70 | 30 | 0 | 0 | 100 | 1, one time | 50.33 | 525 | 12 | 19 |
| Ref. Ex. 10 | 70 | 30 | 100 | 0 | 0 | Showering process X, polymerization X (50 poise or less) | | | | |
| Ref. Ex. 11 | 70 | 30 | 100 | 0 | 0 | Inert gas bubbling process X, polymerization X (50 poise or less) | | | | |

From the results of evaluation of physical properties, the polyamic acid solution of each of Examples 1 to 6 was not problematic in imidization and coating. The polyimide coating layer obtained from the polyamic acid solution of each of Examples 1 to 6 had a thermal expansion coefficient of 5 ppm/°C or less at 50 ~ 450°C and a thermal decomposition temperature of 500°C or more. Therefore, it can be expected that excellent dimensional stability can be exhibited, and simultaneously volatile materials are not generated.

Further, in each of the polyimide coating layers of Examples 1 to 6, the number of foreign matter particles is 30 or less. Therefore, it can be expected that, when a display is manufactured using this polyimide coating layer, the physical properties of the display are not deteriorated, and defective display is not produced.

In contrast, the polyimide coating layer obtained from the polyamic acid solution of each of Reference Examples 1 to 5 and 8 to 9 had an optimal thermal decomposition temperature, but had a thermal expansion coefficient of more than 5 ppm/°C. Therefore, it can be ascertained that the polyamic acid solution of each of Reference Examples 1 to 5 and 8 to 9 is less optimal compared to that of each of Examples 1 to 6 in the formation of a base layer or protective layer of a display device.

Further, in each of the polyimide coating layers of Reference Examples 6 and 7, the number of foreign matter particles is more than 30. Therefore, it can be ascertained that, when a display is manufactured using this polyimide coating layer, the possibility of deteriorating the physical properties of the display and producing a defective display is very high, and thus the polyamic acid solution of each of Reference Examples 6 and 7 is less optimal compared to that of each of Examples 1 to 6 in the formation of a base layer or protective layer of a display device.

Therefore, all of the polyamic acid solutions can be applied to a base layer or protective layer of a display device requiring flexibility, and, particularly, the polyamic acid solutions of Examples 1 to 6 are optimal in the formation the base layer or protective layer of the display device.

Further, the polyimide coating layer formed of the polyamic acid solution does not need an adhesive when it is fixedly attached to a support plate (metal foil, glass plate or the like). Therefore, it can be ascertained that an additional process for attaching the polyimide coating layer to the support plate using the adhesive is not required, thus simplifying the entire process.

Further, a process of manufacturing a display device using the polyamic acid solution of each of Examples 1 to 6 is not greatly influenced by temperature, and thus this process can be easily designed.

## Claims

1. A polyamic acid solution for forming a base layer or protective layer of a display device, wherein the polyamic acid solution is a reaction product of an aromatic dianhydride and an aromatic diamine, and wherein, at the time of forming the solution into an imidized film, the imidized film has a thermal expansion coefficient of 5 ppm/°C or less at a temperature range of 50 ~ 450°C and a thermal decomposition temperature of 500°C or more, the thermal decomposition temperature being defined as a temperature at which a weight reduction rate measured by a thermogravimetric analyzer reaches 1%.

2. The polyamic acid solution of claim 1, wherein the reaction product is a reaction product of a rigid aromatic dianhydride and a rigid aromatic diamine, each of which does not include a -O-, -CO-, -NHCO-, -S-, -SO₂-, -CO-O-, -CH₂- or-C(CH₃)₂- chain between aromatic rings.

3. The polyamic acid solution of claim 1 or 2, wherein the reaction product is a reaction product of para-phenylenediamine as an aromatic diamine, pyromellitic dianhydride as an aromatic dianhydride and biphenyltetracarboxylic dianhydride as an aromatic dianhydride.

4. The polyamic acid solution of claim 3, wherein the reaction product includes biphenyltetracarboxylic dianhydride, as an aromatic dianhyride, in an amount of 40 mol% or less.

5. The polyamic acid solution of claim 1, wherein the polyamic acid solution has a viscosity of 50 ~ 5000 poise.

6. The polyamic acid solution of claim 1, wherein the reaction product is prepared on a scale of 5 L or more with respect to each polymerization.

7. The polyamic acid solution of claim 6, wherein the reaction product is obtained by a showering process of introducing a predetermined amount of a reaction solvent into a reactor, adding powdered aromatic dianhydride or aromatic diamine thereto as a raw material and then washing the nondissolved powdered raw material remaining on the wall of the reactor and stirrer and simultaneously dissolving the washed raw material in the solution.

8. The polyamic acid solution of claim 6, wherein, after the showering process, a reactor is heated to 40 ~ 80°C and then the reaction product is stirred.

9. The polyamic acid solution of any one of claims 6 to 8, wherein the reaction product is obtained by a bubbling process of bubbling the raw material by blowing inert gas into the lowermost stage of a reactor during a dissolving process after the introduction of the raw material.

10. A polyimide coating layer, formed of the polyamic acid solution of claim 1.

11. A display device, comprising the polyimide coating layer of claim 10 as a protective layer.

12. A display device, comprising the polyimide coating layer of claim 10 as a base layer.
